(19) Europäisches Patentamt
European Patent Office
Office européen des brevets

(11) Publication number: 0 073 557 B1

(12) EUROPEAN PATENT SPECIFICATION

(45) Date of publication of patent specification: 25.09.85

(51) Int. Cl.$^4$: C 08 G 69/26, C 08 L 77/00

(21) Application number: 82303083.8

(22) Date of filing: 15.06.82

# (54) Copolyamide, process for producing thereof and copolyamide molding composition comprising thereof.

(30) Priority: 29.06.81 JP 99770/81
29.06.81 JP 99771/81

(43) Date of publication of application:
09.03.83 Bulletin 83/10

(45) Publication of the grant of the patent:
25.09.85 Bulletin 85/39

(84) Designated Contracting States:
DE FR GB NL

(56) References cited:
US-A-3 629 053

CHEMICAL ABSTRACTS, vol. 77, no. 10, 4th September 1972, page 63, no. 83218n, Columbus Ohio (USA);

CHEMICAL ABSTRACTS, vol. 80, no. 24, 17th June 1974, page 66, no. 134676k, Columbus Ohio (USA);

(73) Proprietor: TORAY INDUSTRIES, INC.
2, Nihonbashi Muromachi 2-chome Chuo-ku
Tokyo 103 (JP)

(72) Inventor: Chiba, Kazumasa
40, Shijo-cho 1-chome Minami-ku
Nagoya-shi Aichi-ken (JP)
Inventor: Kato, Nobuo
134, Agata-shimonogo Haruhi-mura
Nishikasugai-gun Aichi-ken (JP)
Inventor: Kobayashi, Kazuhiko
81, Ikegamidai-1 Midori-ku
Nagoya-shi Aichi-ken (JP)

(74) Representative: Coxon, Philip et al
Eric Potter & Clarkson 14 Oxford Street
Nottingham NG1 5BP (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a copolyamide having a novel geometrical isomer ratio, a process for producing thereof and a copolyamide molding composition comprising thereof. A copolyamide and a copolyamide composition of the present invention is useful for molded articles such as machinery parts, electrical parts, and automobile parts.

Polyamide has excellent mechanical properties, chemical resistance, dyeability, and shapability. Utilizing these properties, polyamide has heretofore been used for fabricating various shaped articles such as textiles, films and molded parts. Various kinds of polyamides have been investigated according to many purposes and demands of use. Aliphatic polyamides such as polycaproamide (hereinafter referred to as nylon 6), polyhexamethyleneadipamide (hereinafter referred to as nylon 66) are now manufactured on a large industrial scale and consumed commercially. However, these aliphatic polyamides have the following disadvantages of performance, so that they are not always satisfactory materials in some cases used for various machinery parts and automobile parts which require high rigidity and excellent dimensional stability.

(1) Aliphatic polyamides have relatively low glass transition temperature. Therefore, the rigidity of their molded articles becomes extremely deteriorated at higher circumambient temperatures of above 60°C for example and their heat distortion temperature is relatively low.

(2) As their humidity absorption is relatively high, their rigidity and dimensional stability show a remarkable deterioration by absorption of atmospheric humidity.

In order to improve the above-mentioned disadvantages of aliphatic polyamides, polyamides containing cyclic structural unit such as aromatic, and alicyclic unit in their main chain have been investigated. In particular, it has been known that alicyclic polyamide comprising long chain aliphatic diamine having 11 to 13 carbon atoms and hexahydroterephthalic acid, has high Young's modulus and is a raw material used for textile fabrics having excellent hand touchness (for example in Published Examined Japanese Patent Application No. 29447/72 and 29047/72).

As hexahydroterephthalic acid exists originally in geometrical isomers, the mechanical and thermal properties of polyamide containing hexahydroterephthalic acid as one component, may depend on trans isomer ratio of hexahydroterephthalic acid residues in the polyamide. It was reported that heat supplied during melt-polymerization can result in isomerization of hexahydroterephthalic acid residues in the polyamide to give all of trans form, independent of trans isomer ratio of starting hexahydroterephthalic acid material.

However, the toughness of polyamide containing all trans isomer of hexahydroterephthalic acid residues was extremely insufficient to use for various molded articles.

That is, it has now proved that the improvement of toughness of the polyamide which principally consisting of aliphatic diamine having 11 to 13 carbon atoms and hexahydroterephthalic acid is necessary while maintaining its inherent excellent rigidity, heat resistance and dimensional stability and this object can be achieved by manipulation of trans isomer ratio of hexahydroterephthalic acid residues in the polyamide.

The first object of the present invention is to provide a copolyamide having a novel specified geometrical isomer ratio, and being suitable for injection and extrusion moldings.

The second object of the present invention is to provide a copolyamide which can be made into various molded articles having very excellent toughness and high heat distortion temperature by means of conventional melt-shaped method.

The third object of the present invention is to provide a process for producing an above-mentioned copolyamide by stable melt-polymerization with preventing any gelation and decomposition.

The fourth object of the present invention is to provide a reinforced copolyamide composition which can be made into various molded articles having extremely high heat distortion temperature and good surface appearance by injection molding process even at ordinary mold temperature of below 100°C.

It has now been found that a copolyamide comprising from about 95 to 65 percent by weight of undecamethylenehexahydroterephthalamide units and from about 5 to 35 per cent by weight of hexamethylenehexahydroterephthalamide units, said copolyamide having trans isomer ratio of hexahydroterephthalic acid residues represented by the following equation (I),

$$57 \leqq \frac{t}{c + t} \leqq 83 \quad (\%) \qquad \text{(I)}$$

wherein c denotes cis isomer content and t denotes trans isomer content.

It has now also been found that said copolyamide can be produced by heating a molten mixture comprising from about 95 to 65 parts by weight of equimolar salt of undecamethylenediamine and hexahydroterephthalic acid and from about 5 to 35 parts by weight of equimolar salt of hexamethylenediamine and hexahydroterephthalic acid at a maximum temperature of about 280 to 360°C.

It has now further also been found that a copolyamide molding composition comprises about 100 parts

by weight of said copolyamide and from about 10 to 100 parts by weight of inorganic reinforcing agent.

Fig. 1 illustrates a representative $^{13}C$-nuclear magnetic resonance spectrum chart of the present copolyamide, for example copolyamide comprising 80 per cent by weight of undecamethylenehexahydroterephthalamide unit and 20 percent by weight of hexamethylenehexahydroterephthalamide unit measured at 140°C on about 30 per cent solution in orthochlorophenol.

At first a process for producing a copolyamide, subsequently the copolyamide obtained according to said process and finally the copolyamide molding composition containing inorganic reinforcing agent are described.

First of all, undecamethylenediamine, hexamethylenediamine and hexahydroterephthalic acid as starting materials of the copolyamide are prepared. Undecamethylenediamine, hexamethylenediamine and hexahydroterephthalic acid may be supplied by the well-known producing method. For example, undecamethylenediamine can be produced by decarboxylated dimerization of ε-caprolactam and succeeding reduction. Hexahydroterephthalic acid can be produced by hydrogenation of terephthalic acid.

Then, equimolar salt of undecamethylenediamine and hexahydroterephthalic acid and equimolar salt of hexamethylenediamine and hexahydroterephthalic acid may be prepared. These salts can be easily obtained in the presence of water by mixing undecamethylenediamine, hexamethylenediamine and hexahydroterephthalic acid respectively. The mixture of above-described equimolar salts of undecamethylenediamine, hexamethylenediamine and hexahydroterephthalic acid may be polymerized in the molten state by use of any conventional polymerization process. Mixture ratio of equimolar salt of undecamethylenediamine and hexahydroterephthalic acid to equimolar salt of hexamethylenediamine and hexahydroterephthalic acid should be set from about 95:5 to 65:35, preferably from about 90:10 to 70:30 by weight. The melt-polymerization of said mixture must be carried out at maximum temperatures of about 280 to 360°C. The term "maximum temperature" means the highest temperature which the molten polymer in the polymerization vessel reaches during melt-polymerization. Since the molten polymer is usually gradually heated in the polymerization, the temperature of the molten polymer is usually gradually elevated as the time passes. Therefore the maximum temperature often means the final temperature of the molten polymer reached during melt-polymerization. In case that maximum temperature is below 280°C, melt-polymerization cannot be carried out as lower than the melting point of the copolyamide. In case that maximum temperature is above 360°C, decomposition of the copolyamide occurs considerably, resulting in difficulties of stable melt-polymerization. Furthermore, when the maximum temperature is either below 280°C or above 360°C, a copolyamide having trans isomer ratio of hexahydroterephthalic acid residues in the copolyamide within from 57 to 83 percent cannot be obtained. The trans isomer ratio of hexahydroterephthalic acid residues in the copolyamide comprising from about 95 to 65 percent by weight of undecamethylenehexahydroterephthalamide unit and from about 5 to 35 percent by weight of hexamethylenehexahydroterephthalamide unit is exhibited as a function of the maximum temperature of molten polymer, independently of trans isomer ratio of strating hexahydroterephthalic acid material. Hexahydroterephthalic acid residues can't be isomerized to all of trans form during melt-polymerization, that is, cis isomer content increases with higher maximum temperature within a range from 280 to 360°C. The relationship between trans isomer ratio of hexahydroterephthalic acid residues in the copolyamide and maximum temperature of the molten polymer can be expressed in accordance with the following equation (II),

$$85 - \frac{T}{90} \leqq \frac{t}{c + t} \leqq 105 - \frac{7}{90} T \quad (\%) \qquad (II)$$

wherein c denotes cis isomer content, t denotes trans isomer content and T denotes maximum temperature. That is, it has now found that the copolyamide having desired trans isomer ratio of hexahydroterephthalic acid residues can be obtained by control of maximum temperature.

A copolyamide thus obtained comprises undecamethylenehexahydroterephthalamide units and hexamethylenehexahydroterephthalamide units. Undecamethylenehexahydroterephthalamide unit is represented by the following formula

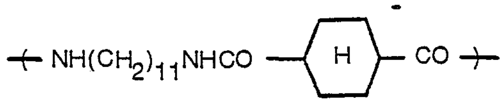

and hexamethlenehexahydroterephthalamide unit is represented by the following formula

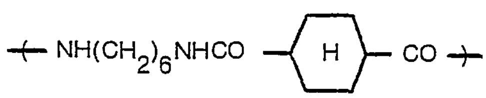

The copolyamide comprising undecamethylenehexahydroterephthalamide unit and hexamethylenehexahydroterephthalamide units doesn't have any of the disadvantages referred to below. In other words, high rigidity and good melt stability during polymerization and shaping step can be achieved by selecting hexamethylenehexahydroterephthalamide unit as the minor component of the copolyamide.

(A) Polyundecamethylenehexahydroterephthalamide has lower glass transition temperature and lower heat distortion temperature of molded articles than the copolyamide of the present invention.

(B) Copolyamides containing aliphatic component such as caproamide, undecaneamide, dodecaneamide, hexamethyleneadipamide, and hexamethylenesebacamide have lower glass transition temperature and lower heat distortion temperature than the copolyamide of the present invention.

(C) Copolyamides containing terephthalic acid such as hexamethyleneterephthalamide, and undecamethyleneterephthalamide have poor melt stability and therefore, gelation is easy to occur during melt-polymerization and melt-shaping process. Copolyamides containing isophthalic acid such as hexamethyleneisophthalamide, and undecamethyleneisophthalamide don't possess high crystallinity and have lower heat distortion temperature than the copolyamide of the present invention.

The copolyamide of the present invention comprises from about 95 to 65 percent by weight, preferably from about 90 to 70 percent by weight of undecamethylenehexahydroterephthalamide units and from about 5 to 35 percent by weight, preferably from about 10 to 30 percent by weight of hexamethylenehexahydroterephthalamide units. When the content of undecamethylenehexahydroterephthalamide units is not less than 95 percent by weight in the copolyamide, heat distortion temperature of molded articles is not sufficient. Whereas, in case that the content of undecamethyleneyhexahydroterephthalamide units is not more than 65 percent by weight in the copolyamide, melting point of the copolyamide becomes too high to achieve stable melt-polymerization and melt-molding of the copolyamide. The trans isomer ratio of hexahydroterephthalic acid residues in the copolyamide of the present invention is from 57 to 83 percent. When the trans isomer ratio of hexahydroterephthalic acid residues in the copolyamide is not less than 83 percent, it is unfavorable that toughness of the copolyamide is not sufficient to use for the molded articles. When the trans isomer ratio of hexahydroterephthalic acid residues in the copolyamide is not more than 57 per cent, crystallinity of the copolyamide becomes deteriorated and melting point of the copolyamide is not high enough to give satisfaction.

A polymerization degree of thus obtained copolyamide is not limited. A relative viscosity of the copolyamide can be varied from 1.5 to 5.0 according to the final use at will. The copolyamide of the present invention may be optionally prepared in the presence of an additional small amount of another polyamide-forming component such as ε-caprolactam, ω-laurolactam, 11-aminoundecanoic acid, hexamethylenediammonium, adipate, hexamethylenediammonium sebacate, and so on or may be mixed with other polymer materials in moderate amounts without greatly changing the essential characteristics of the copolyamide of the present invention.

Trans isomer ratio of hexahydroterephthalic acid residues in the copolyamide is suitably determined by spectroscopy. For example, the copolyamide is dissolved in orthochlorophenol and $^{13}C$-nuclear magnetic resonance ($^{13}C$—NMR) measurement is carried out in an operating frequency of 25.05 MHz. The spectral chart thus obtained is shown in Figure 1. In this spectrum chart, the absorption peak represented by "Ua (δ = 39.9 ppm)" is attributed to 1,11-carbon atoms of undecamethylenediamine residue

$$U: \quad -HN\overset{a}{C}H_2(CH_2)_9\overset{a}{C}H_2NH_2-,$$

the absorption peak represented by "Ha (δ = 39.7 ppm)" is attributed to 1,6-carbon atoms of hexamethylenediamine residue

$$H: \quad -HN\overset{a}{C}H_2(CH_2)_4\overset{a}{C}H_2NH_2-,$$

the absorption peak represented by "Ta(cis) (δ = 26.8 ppm)" is attributed to 2,3,5,6-carbon atoms of cis isomer of hexahydroterephthalic acid residue

T(cis):

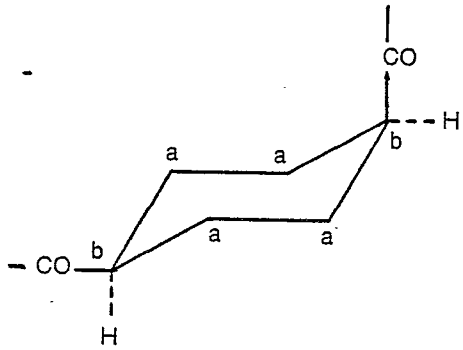

the absorption peak represented by "Ta(trans) (δ = 29.0 ppm)" is attributed to 2,3,5,6-carbon atoms of trans isomer of hexahydroterephthalic acid residue

T (trans) :

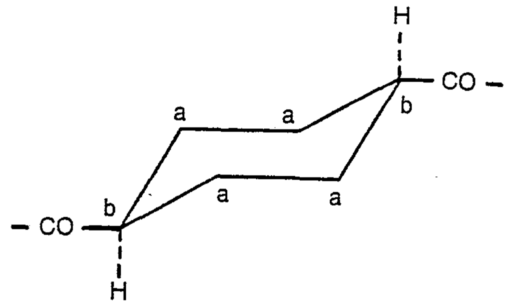

the absorption peak represented by "Tb(cis) (δ = 42.3 ppm)" is attributed to 1,4-carbon atoms of cis isomer of hexahydroterephthalic acid residue, and the absorption peak represented by "Tb(trans) (δ = 44.6 ppm)" is attributed to 1,4 carbon atoms of trans isomer of hexahydroterephthalic acid residue.

The isomer ratio of hexahydroterephthalic acid residues in the copolyamide is determined by comparing peak areas of two absorption peaks which are attributed to 1,4-carbon atoms of cis (δ = 42.3 ppm) and trans (δ = 44.6 ppm) isomers of hexahydroterephthalic acid residues, respectively.

The copolyamide of the present invention can be formed into a wide range of useful articles by conventional molding methods employed in the fabrication of thermoplastics, such as injection molding, extrusion molding and blow molding. Especially, machinery parts, automobile parts and electrical parts obtained by injection molding or extrusion molding are useful in practice.

The copolyamide of the present invention may contain other additives such as pigments, dyes, flame retarding agents, heat stabilizers, antioxidants, light stabilizers, lubricants, mold-releasing agents, antistatic agents, plasticizers, and nucleating agents.

Another characteristic of the present invention resides in compounding inorganic reinforcing agents to the copolyamide comprising from about 95 to 65 percent by weight of undecamethylenehexahydroterephthalamide units and from about 5 to 35 percent by weight of hexamethylenehexahydroterephthalamide unit for improving rigidity and heat resistance. It is well known that mechanical and thermal properties of polyamide are effectively improved by addition of inorganic reinforcing agents to polyamides. A reinforced polyamide composition has been widely used for fabricating various molded articles such as automobile parts, and machinery parts in place of metal materials, utilizing the following excellent characteristics, i.e., (1) extremely high rigidity and high heat distortion temperature and (2) low humidity absorption and good dimensional stability.

However, the composition comprising aliphatic polyamides such as nylon 6 and nylon 66 and inorganic reinforcing agents, is not always a satisfactory material in some cases when used for molded articles which especially require high rigidity and excellent dimensional stability in higher circumambient temperature and humidity. On the other hand reinforced polyamides containing cyclic structural unit such as aromatic and alicyclic units can reduce above-mentioned disadvantages but there exists a serious problem in the case where such reinforced polyamides containing cyclic structural unit are shaped by an injection molding process. Generally, because polyamides containing cyclic structural units in the polymer main chain have comparatively high crystallization temperature in concert with high glass transition temperature, the mold temperature must be kept at higher temperature than their crystallization temperature such as above 100°C in order to obtain injection molded articles having high crystallinity. When the mold temperature is lower than 100°C, the crystallinity of injection molded articles becomes deteriorated, resulting in low heat distortion temperature and poor dimensional stability. In other words, it has been generally considered that high mold temperature can only enable the reinforced polyamides containing cyclic structural units to embody inherent excellent characteristics.

For example, it is reported in Published Examined Japanese Patent Application No. 32458/79 that injection molded articles of polymetaxylyleneadipamide composition incorporated inorganic reinforcing agents revealed a high heat distortion temperature of above 200°C when the mold temperature was kept at 130 to 150°C. On the other hand, the heat distortion temperature of said injection molded articles shaped at a mold temperature of 80°C was about 90°C. It is also reported that injection molded articles of the reinforced polymetaxylyleneadipamide composition had poor surface gloss when mold temperature was below 100°C.

In practice, in order to keep the mold temperature of above 100°C, temperature regulation systems with special equipment such as oil line or heating wire should be adopted. These apparatus result in disadvantages of economical efficiency and processability. Surprisingly, it has now found that the reinforced copolyamide composition comprising from about 95 to 65 percent by weight of undecamethylenehexahydroterephthalamide units and from about 5 to 35 percent by weight of hexamethylenehexahydroterephthalamide units can be formed into injection molded articles which show extremely high heat distortion temperature and excellent surface gloss even when the mold temperature is below 100°C. Therefore ordinary procedure can be employed in the injection molding of the reinforced copolyamide composition of the present invention. Of course, the mold temperature may be above 100°C and under

such condition, various injection molded articles having extremely high heat distortion temperature and excellent surface gloss can be also obtained.

This effect can be obtained in copolyamide molding composition which comprises (a) about 100 parts by weight of copolyamide comprising from about 95 to 65 percent by weight of undecamethylenehexahydroterephthalamide units and from about 5 to 35 percent by weight of hexamethylenehexahydroterephthalamide units and (b) from about 10 to 100 parts by weight of inorganic reinforcing agent, the copolyamide having any trans isomer ratio of hexahydroterephthalic acid residues, but when the copolyamide has trans isomer ratio of hexahydroterephthalic acid residues represented by the abovemention equation (I), it is more effective.

Representative examples of fibrous or finely divided reinforcing agents to be used in the present invention include glass fibers, carbon fibers, asbestos fibers, calcium metasilicate referred to as wollastonite, talc, calcium carbonate, magnesium oxide, aluminum oxide, mica, glass beads and potassium titanate whiskers. Inorganic reinforcing agents are used in an amount of from about 10 to 100 parts by weight based on 100 parts by weight of the copolyamide. When the amount of reinforcing agents is not more than 10 parts by weight, the effect of reinforcement is not sufficient. On the other hand, when the amount of reinforcing agents is not less than 100 parts by weight, the toughness of the composition is deteriorated. Inorganic reinforcing agents can be added to the copolyamide by use of a conventional process. An industrially advantageous process includes dry-blending pellets of the copolyamide with reinforcing agents in a mixing machine such as a Henschel mixer. The mixture is, if desired, thereafter heated and kneaded into a molten state by extruder and is then molded into shaped articles.

The reinforced copolyamide composition of the present invention can be formed into a wide range of useful articles by conventional molding method employed in the fabrication of thermoplastics. Especially, machinery parts and automobile parts obtained by injection or extrusion molding are useful in practice. The copolyamide molding composition of the present invention may optionally contain other additives such as pigments, dyes, flame retarding agents, heat stabilizers, antioxidants, light stabilizers, lubricants, mold-releasing agents, antistatic agents, plasticizers, nucleating agents and other polymer materials in moderate amounts without greatly changing the essential characteristics of the copolyamide molding composition of the present invention.

Copolyamides and copolyamide compositions described in the following examples were characterized as follows:

1. Relative viscosities were measured at 25°C in 98 percent sulfuric acid at a concentration of 1.0 gram/100 mililiters.

2. Melting point and glass transition temperature were determined using a differential scanning calorimeter (Perkin Elmer Co. DSC—1B) operating at a scan speed of 20°C/minute.

3. Elemental Analyses were carried out using an organic micro analyzer (Yanagimoto Co. MU—2).

4. Trans isomer ratio of hexahydroterephthalic acid residues in the copolyamide was determined by comparing the areas of peaks attributed to the 1,4-carbon atoms of cyclohexane ring in each geometrical isomers in $^{13}C$—NMR spectra. $^{13}C$—NMR spectra were obtained on a JOEL FX—100 spectrometer (JOEL Limited) at 140°C on about 30 percent solutions in orthochlorophenol. Chemical shifts were reported in relation to internal tetramethylsilane. Fourier transform proton-noise-decoupled $^{13}C$—NMR spectra were obtained on 5,000 Hz sweeps that used 45° RF pulses.

5. Mechanical properties of injection molded specimens of copolyamides and copolyamide compositions in examples were measured according to ASTM procedures.

| | |
|---|---|
| Tensile strength | : ASTM D638 |
| Flexural strength and modulus | : ASTM D790 |
| Izod impact strength | : ASTM D256 |
| Heat distortion temperature | : ASTM D648 |
| Humidity absorption | : ASTM D570 |

Example 1

A mixture of 89 parts by weight of undecamethylenediammoniumhexahydroterephthalate (hereinafter referred to as 11T(H)) salt and 22.9 parts by weight of hexamethylenediammoniumhexahydroterephthalate (hereinafter referred to as 6T(H)) salt was added together with 35 parts by weight of deionized water into the polymerization vessel equipped with a stirrer and an inert gas inlet and outlet.

After the replacement of air in the vessel by nitrogen, the mixture was heated to 210°C in 2 hours under stirring. The polymerization was continued under a constant internal pressure of 17.5 kilograms/centimeter$^2$ for 2.5 hours, wherein the temperature of the molten mixture was raised up to 300°C. In the next step, the internal pressure was decreased gradually to an atmospheric pressure in 2 hours and succeedingly nitrogen was passed over the mixture for 0.5 hour, the highest temperature of the molten mixture i.e. maximum temperature being 323°C. The molten polymer was then discharged, water

quenched and cut to give colorless granules of copolyamide. Elemental analysis revealed that the copolyamide thus obtained was consisted of 80 percent by weight of 11T(H) unit and 20 percent by weight of 6T(H) unit.

Results of elemental analysis

| | Calculated for 11T(H)/6T(H) = 80/20 weight percent (%) | Found (%) |
|---|---|---|
| C | 69.98 | 69.96 |
| H | 10.35 | 10.31 |
| N | 9.18 | 9.20 |

Relative viscosity of this copolyamide was 2.41.

Melting point and glass transition temperature were 287°C and 119°C, respectively.

$^{13}C$—NMR spectrum of this copolyamide measured in orthochlorophenol (OCP) solution (30 weight/volume percent) at 140°C is shown in Figure 1. Trans isomer ratio of hexahydroterephthalic acid residues in this copolyamide was determined to be 72 percent by comparing the areas of the absorption peaks attributed to 1,4-carbon atoms of cyclohexane ring in trans- ($\delta = 44.6$ ppm) and cis- ($\delta = 42.3$ ppm) isomers. These results satisfied the equation (I).

The granules of this copolyamide were dried under vacuum at 100°C for 24 hours, then injection molded to provide test-pieces designated by ASTM. Injection molding was carried out in an injection temperature of 320°C and mold temperature of 80°C. Mechanical properties were measured according to ASTM procedures and the results were summarized in Table 1. This copolyamide proved to have a very high heat distortion temperature and good other mechanical properties.

Example 2

A mixture of 77.9 parts by weight of 11T(H) salt and 34.3 parts by weight of 6T(H) salt was polymerized in a similar procedure described in Example 1 to give a copolyamide whose characteristics and mechanical properties were listed in Table 1.

TABLE 1

| | Example 1 | Example 2 |
|---|---|---|
| Polyamide | | |
| 11T(H) (%) | 80 | 70 |
| 6T(H) (%) | 20 | 30 |
| Relative viscosity | 2.41 | 2.35 |
| Melting point (°C) | 287 | 302 |
| Glass transition temp. (°C) | 119 | 123 |
| Elemental analysis | | |
| Calcd. C (%) | 69.98 | 69.57 |
| H (%) | 10.35 | 10.25 |
| N (%) | 9.18 | 9.42 |
| Found C (%) | 69.96 | 69.55 |
| H (%) | 10.31 | 10.32 |
| N (%) | 9.20 | 9.46 |
| Trans/cis ratio ($^{13}C$—NMR) | | |
| trans-form content (%) | 72.0 | 69.6 |
| cis-form content (%) | 28.0 | 30.4 |
| Mechanical properties | | |
| Heat distortion temp. (°C) | 116 | 121 |
| Tensile strength (kg/cm$^2$) | 805 | 810 |
| Flexural strength (kg/cm$^2$) | 1,100 | 1,100 |
| Flexural modulus (kg/cm$^2$) | 21,000 | 21,500 |
| Izod impact strength (kg cm/cm notch) | 5.2 | 6.0 |

Comparative Example 1

The copolyamide and injection molded test-piece consisting of 80 percent by weight of 11T(H) unit and 20 percent by weight of 6T(H) unit, being prepared in Example 1 were heated at 210°C for 2 days while preventing the thermal and thermo-oxidative decomposition. The trans isomer ratio of hexahydroterephthalic acid residues in the copolyamide thus obtained was 95 percent and izod impact strength of the molded test-pieces was only 2 kilogram · centimeter/centimeter notch, whose toughness was practically insufficient to be employed for the molded articles.

Comparative Example 2

A mixture of 89 parts by weight of 11T(H) salt and 22.9 parts by weight of 6T(H) salt described in Example 1 was polymerized at maximum temperature of 400°C. The trans isomer ratio of hexahydroterephthalic acid residues in the above-obtained copolyamide was 55 percent and the melting point of the copolyamide was as low as 266°C.

Comparative Example 3

100 parts by weight of 11T(H) salt and 25 parts by weight of deionized water were added into the vessel and polymerization was carried out in the similar procedure to Example 1. Relative viscosity, melting point and glass transition temperature of thus obtained polyundecamethylenehexahydroterephthalamide were as follows:

| | |
|---|---|
| Relative viscosity | : 2.40 |
| Melting point | : 308°C |
| Glass transition temperature | : 103°C |

Mechanical properties of this polyamide were measured in the same way as described in Example 1.

Heat distortion temperature of this polyamide was 98°C, so it was found that polyundecamethylenehexahydroterephthalamide was inferior to the copolyamides in Example 1 and 2 in mechanical properties at higher circumambient temperature of above 100°C.

Comparative Example 4

A mixture of 50 parts by weight of 11T(H) salt and 50 parts by weight of 6T(H) salt was added together with 35 parts by weight of deionized water into the vessel and melt polymerization of the mixture was tried in a similar process to Example 1. However, solidification of the mixture occurred during polymerization process and stable melt-polymerization proved to be almost impossible.

Comparative Example 5

A mixture of 80 parts by weight of 11T(H) salt and 20 parts by weight of ε-caprolactam was polymerized in the same way as described in Example 1. Copolyamide thus obtained had the following properties. Glass transition temperature and heat distortion temperature were remarkably deteriorated.

| | |
|---|---|
| Relative viscosity | : 2.46 |
| Melting point | : 265°C |
| Glass transition temperature | : 82°C |
| Heat distortion temperature (18.56 kilograms/centimeter$^2$) | : 78°C |
| Tensile strength at yield | : 670 kilograms/centimeter$^2$ |
| Flexural strength | : 905 kilograms/centimeter$^2$ |
| Flexural modulus | : 17,000 kilograms/centimeter$^2$ |

Comparative Example 6

A mixture of 40 parts by weight of 11T(H) salt and 60 parts by weight of undecamethylenediammoniumterephthalate was added together with 25 parts by weight of deionized water into the polymerization vessel and then melt polymerization was carried out in a similar procedure to Example 1. A copolyamide thus obtained was consisted of 40 percent by weight of 11T(H) unit and 60 percent by weight of undecamethyleneterephthalamide unit. Ten grams of above-mentioned copolyamide was placed in a glass ampoule and then heated at 320°C for 1 to 6 hours in nitrogen atmosphere as comparing with the copolyamide described in Example 1. After these treatments, relative viscosity was measured and results are shown in Table 2. It turned out from these results that the copolyamide in this example formed some gel being insoluble to a concentrated sulfuric acid in 3 hours treatment at 320°C and therefore had very poor melt-stability. On the other hand, the copolyamide in Example 1 exhibited excellent melt-stability.

TABLE 2

| Sample | Relative viscosity | | | |
|---|---|---|---|---|
| | Before anealing | Anealing Time at 320°C (hr) | | |
| | | 1 | 3 | 6 |
| Comparative Example 6 | 2.38 | 3.75 | insol. gel | insol. gel |
| Example 1 | 2.41 | 2.45 | 2.43 | 2.46 |

Example 3

A mixture of 100 parts by weight of copolyamide obtained in Example 1 and 45 parts by weight of glass fibers was kneaded at 300°C using a 65 millimeters ϕ extruder. The discharged melt-guts were quenched by water, cut and dried in vacuo prior to molding. Injection molding of the composition was carried out in a cylinder temperature of 320°C and mold temperature of 80°C to give test-pieces. Mechanical properties of these test-pieces were measured according to ASTM procedures and the obtained results were summarized in Table 3.

Example 4 to 9

By the method described in Example 3, but varying the kind and amount of the copolyamide and inorganic reinforcing agents, the copolyamide composition was prepared and test-pieces were molded. The characteristics of the molded test-pieces obtained were summarized in Table 3. In each cases, the copolyamide composition showed excellent mechanical properties.

TABLE 3

| | | Example 3 | Example 4 | Example 5 | Example 6 |
|---|---|---|---|---|---|
| Copolyamide | wt % | 11T(H)/6T(H) =80/20 | 11T(H)/6T(H) =70/30 | 11T(H)/6T(H) =80/20 | ,, |
| Reinforcing agent | | glass fibers | talc | carbon fibers | Wollastonite |
| Content of reinforcing agent | parts/Nylon 100 parts | 45 | 50 | 45 | 50 |
| Mold temperature | °C | 80 | 90 | 90 | 80 |
| Tensile strength | $kg/cm^2$ | 1,500 | 1,600 | 2,100 | 1,600 |
| Flexural strength | $kg/cm^2$ | 2,300 | 2,300 | 3,000 | 2,400 |
| Flexural modulus | $kg/cm^2$ | 83,000 | 85,000 | 185,000 | 80,000 |
| Izod impact strength | kg.cm/cm notch | 8 | 6 | 5 | 6 |
| Heat distortion temperature (Load 18.6 $kg/cm^2$) | °C | 265 | 265 | 265 | 270 |
| Water absorption | wt % | 0.17 | 0.18 | 0.17 | 0.15 |
| Surface gloss of molded articles | | excellent | excellent | good | excellent |

TABLE 3 (Continued)

| | | Example 7 | Example 8 | Example 9 |
|---|---|---|---|---|
| Copolyamide | wt % | 11T(H)/6T(H) = 80/20 | ,, | 11T(H)/6T(H) = 75/25 |
| Reinforcing agent | | Calcium carbonate | Glass fibers | Glass fibers |
| Content of reinforcing agent | parts/Nylon 100 parts | 45 | 90 | 30 |
| Mold temperature | °C | 80 | 95 | 130 |
| Tensile strength | $kg/cm^2$ | 1,400 | 2,000 | 1,200 |
| Flexural strength | $kg/cm^2$ | 2,200 | 3,100 | 1,800 |
| Flexural modulus | $kg/cm^2$ | 81,000 | 132,000 | 68,000 |
| Izod impact strength | kg.cm/cm notch | 6 | 9 | 7 |
| Heat distortion temperature (Load 18.6 $kg/cm^2$) | °C | 260 | 270 | 267 |
| Water absorption | wt % | 0.17 | 0.10 | 0.20 |
| Surface gloss of molded articles | | good | excellent | excellent |

## Claims

1. A copolyamide comprising from about 95 to 65 percent by weight of undecamethylenehexahydroterephthalamide units and from about 5 to 35 percent by weight of hexamethylenehexahydroterephthalamide units, said copolyamide having trans isomer ratio of hexahydroterephthalic acid residues represented by the following equation (I),

$$57 \leqq \frac{t}{c+t} \leqq 83\ (\%) \qquad (I)$$

wherein c denotes cis isomer content and t denotes trans isomer content.

2. The copolyamide of claim 1 wherein comprising from about 90 to 70 percent by weight of undecamethylenehexahydroterephthalamide units and from about 10 to 30 percent by weight of hexamethylenehexahydroterephthalamide units.

3. A process for producing a copolyamide having trans isomer ratio of hexahydroterephthalic acid residues represented by the following equation (I),

$$57 \leqq \frac{t}{c+t} \leqq 83\ (\%) \qquad (I)$$

wherein c denotes cis isomer content and t denotes trans isomer content, which comprises heating a molten mixture comprising from about 95 to 65 parts by weight of equimolar salt of undecamethylenediamine and hexahydroterephthalic acid from about 5 to 35 parts by weight of equimolar salt of hexamethylenediamine and hexahydroterephthalic acid at maximum temperature of about 280 to 360°C.

4. A copolyamide molding composition which comprises

(a) about 100 parts by weight of copolyamide comprising from about 95 to 65 percent by weight of undecamethylenehexahydroterephthalamide units and from about 5 to 35 percent by weight of hexamethylenehexahydroterephthalamide units and

(b) from about 10 to 100 parts by weight of inorganic reinforcing agent.

5. A copolyamide molding composition which comprises

(a) about 100 parts by weight of copolyamide comprising from about 95 to 65 percent by weight of undecamethylenehexahydroterephthalamide units and from about 5 to 35 percent by weight of hexamethylenehexahydroterephthalamide units, said copolyamide having trans isomer ratio of hexahydroterephthalic acid residues represented by the following equation (I),

$$57 \leqq \frac{t}{c+t} \leqq 83\ (\%) \qquad (I)$$

wherein c denotes cis isomer content and t denotes trans isomer content and

(b) from about 10 to 100 parts by weight of inorganic reinforcing agent.

6. The copolyamide molding composition of claim 4 or 5 wherein said inorganic reinforcing agent is selected from the group consisting of glass fibers, asbestos fibers, carbon fibers, calcium metasilicate, talc, calcium carbonate, magnesium oxide, aluminum oxide, mica, glass beads and potassium titanate whiskers.

## Patentansprüche

1. Copolyamid mit etwa 95 bis 65 Gew.-% Undecamethylenhexahydroterephthalamideinheiten und etwa 5 bis 35 Gew.-% Hexamethylenhexahydroterephthalamideinheiten sowie einem trans-Isomerenverhältnis von Hexahydroterephthalsäureresten, dargestellt durch die folgende Gleichung (I),

$$57 \leqq \frac{t}{c+t} \leqq 83\ (\%) \qquad (I)$$

in der c den cis-Isomerengehalt und t den trans-Isomerengehalt darstellen.

2. Copolyamid nach Anspruch 1 mit etwa 90 bis 70 Gew.-% Undecamethylenhexahydroterephthalamideinheiten und etwa 10 bis 30 Gew.-% Hexamethylenhexahydroterephthalamideinheiten.

3. Verfahren zur Herstellung eines Copolyamides mit einem trans-Isomerenverhältnis von Hexahydroterephthalsäureresten, dargestellt durch die folgende Gleichung (I),

$$57 \leqq \frac{t}{c+t} \leqq 83\ (\%) \qquad (I)$$

in der c den cis-Isomerengehalt und t den trans-Isomerengehalt darstellen, bei dem man eine aufgeschmolzene Mischung mit etwa 95 bis 65 Gew.-Teilen eines äquimolaren Salzes aus Undecamethylendiamin und Hexahydroterephthalsäure und etwa 5 bis 35 Gew.-Teilen eines äquimolaren Salzes aus Hexamethylendiamin und Hexahydroterephthalsäure auf eine maximale Temperatur von etwa 280 bis 360°C erhitzt.

4. Copolyamid-Formmasse mit

(a) etwa 100 Gew.-Teilen eines Copolyamides mit etwa 95 bis 65 Gew.-% Undecamethylenhexahydroterephthalamideinheiten und etwa 5 bis 35 Gew.-% Hexamethylenhexahydroterephthalamideinheiten und mit

(b) 10 bis 100 Gew.-Teilen eines anorganischen Verstärkungsmittels.

5. Copolyamid-Formmasse mit

(a) etwa 100 Gew.-Teilen eines Copolyamides mit etwa 95 bis 65 Gew.-% Undecamethylenhexahydroterephthalamideinheiten und etwa 5 bis 35 Gew.-% Hexamethylenhexahydroterephthalamideinheiten sowie einem trans-Isomerenverhältnis von Hexahydroterephthalsäureresten, dargestellt durch die folgende Gleichung (I),

$$57 \leqq \frac{t}{c+t} \leqq 83\ (\%) \qquad (I)$$

in der c den cis-Isomerengehalt und t den trans-Isomerengehalt darstellen und

(b) etwa 10 bis 100 Gew.-Teilen eines anorganischen Verstärkungsmittels.

6. Copolyamid-Formmasse nach Anspruch 4 oder 5, in der das anorganische Verstärkungsmittel ausgewählt ist aus Glasfasern, Asbestfasern, Kohlefasern, Calciummetasilikat, Talkum, Calciumcarbonat, Magnesiumoxid, Aluminiumoxid, Glimmer, Glasperlen und Kaliumtitanatwhiskern.

**Revendications**

1. Copolymère comprenant d'environ 95 à 65 pourcent en poids de motifs undécaméthylènehexahydrotéréphtalamide et d'environ 5 à 35 pourcent en poids de motifs hexaméthylènehexahydrotéréphtalamide, ce copolyamide présentant une proportion d'isomère trans des restes d'acide hexahydrotéréphtalique représentée par l'équation suivante (I)

$$57 \leqq \frac{t}{c+t} \leqq 83\ (\%) \qquad (I)$$

dans laquelle c représente la teneur en isomère cis et t la teneur en isomère trans.

2. Copolymère selon la revendication 1, caractérisé en ce qu'il comprend d'environ 90 à 70 pourcent en poids de motifs undécaméthylènehexahydrotéréphtalamide et d'environ 10 à 30 pourcent en poids de motifs hexaméthylènehexahydrotéréphtalamide.

3. Procédé de production d'un copolyamide présentant une proportion d'isomère trans des restes d'acide hexahydrotéréphtalique représenté par l'équation suivante (I)

$$57 \leqq \frac{t}{c+t} \leqq 83\ (\%) \qquad (I)$$

dans laquelle c représente la teneur en isomère cis et t la teneur en isomère trans, caractérisé en ce qu'il comprend le chauffage d'un mélange fondu comprenant d'environ 95 à 65 parties en poids de sel équimolaire d'undécaméthylènediamine et d'acide hexahydrotéréphtalique et d'environ 5 à 35 parties en poids de sel équimolaire d'hexaméthylènediamine et d'acide hexahydrotéréphtalique à une température maximum d'environ 280 à 360°C.

4. Composition de moulage de copolyamide, caractérisé en ce qu'elle comprend

(a) environ 100 parties en poids de copolyamide comprenant d'environ 95 à 65 pourcent en poids de motifs undécaméthylènehexahydrotéréphtalamide et d'environ 5 à 35 pourcent en poids de motifs hexaméthylènehexahydrotéréphtalamide et

(b) d'environ 10 à 100 parties en poids de charge de renforcement inorganique.

5. Composition de moulage de copolyamide, caractérisée en ce qu'elle comprend

(a) environ 100 parties en poids de copolyamide comprenant d'environ 95 à 65 pourcent en poids de motifs undécaméthylènehexahydrotéréphtalamide et d'environ 5 à 35 pourcent en poids de motifs hexaméthylènehexahydrotéréphtalamide, ce copolyamide présentant une proportion d'isomère trans des restes d'acide hexahydrotéréphtalique représentée par l'équation suivante (I):

$$57 \leqq \frac{t}{c+t} \leqq 83\ (\%) \qquad (I)$$

dans laquelle c représente la teneur en isomère cis et t la teneur en isomère trans et

(b) d'environ 10 à 100 parties en poids de charge de renforcement inorganique.

6. Composition de moulage de copolyamide selon la revendication 4 ou 5, caractérisée en ce que la charge de renforcement inorganique est choisie dans le groupe constitué par les fibres de verre, les fibres d'amiante, les fibres de carbone, le métasilicate de calcium, le talc, le carbonate de calcium, l'oxyde de magnésium, l'oxyde d'aluminium, le mica, les billes de verre et les trichites de titanate de potassium.

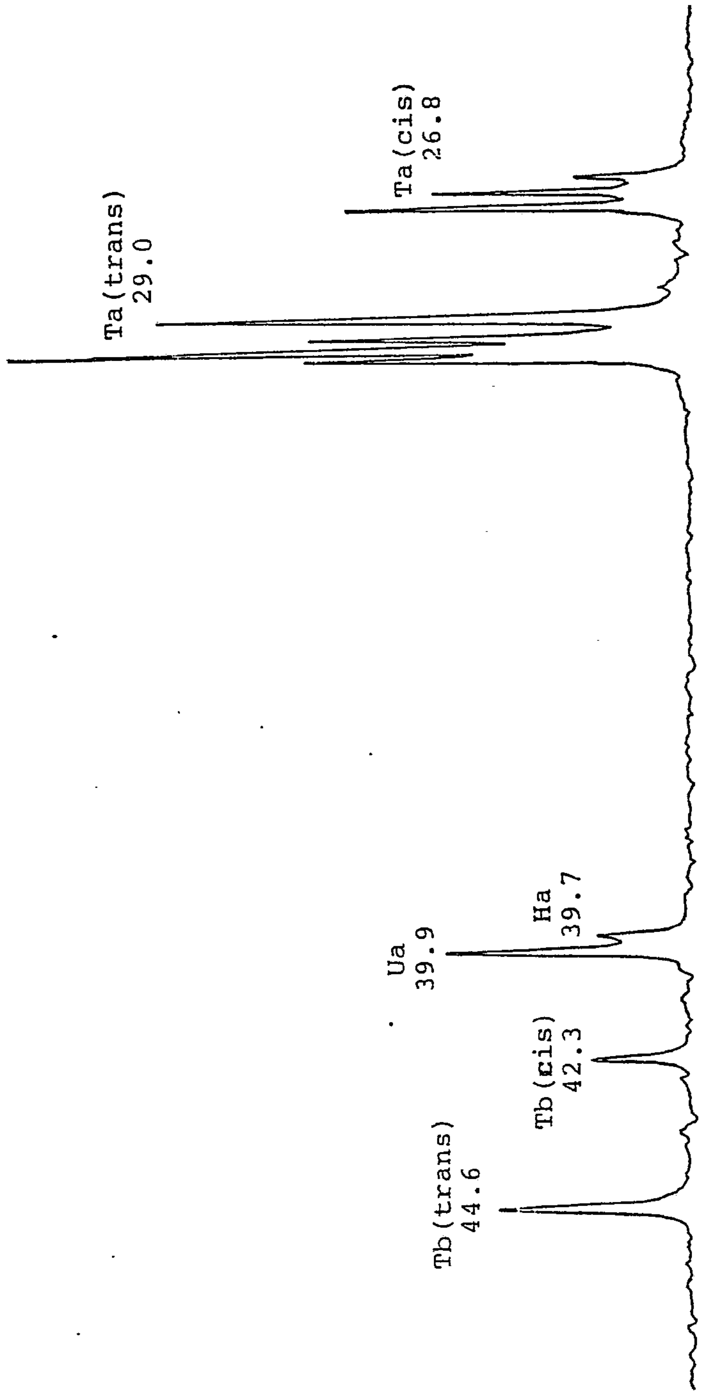


Figure 1